Europäisches Patentamt

**European Patent Office**

**Office européen des brevets**

(11) Veröffentlichungsnummer: **0 065 302**
**A1**

(19)

(12) ## EUROPÄISCHE PATENTANMELDUNG

(21) Anmeldenummer: **82104294.2**

(22) Anmeldetag: **17.05.82**

(51) Int. Cl.³: **B 65 G 47/49,** G 06 K 19/04, B 23 Q 41/02

(30) Priorität: **20.05.81 DE 3120023**

(43) Veröffentlichungstag der Anmeldung: **24.11.82 Patentblatt 82/47**

(84) Benannte Vertragsstaaten: **CH DE FR GB IT LI**

(71) Anmelder: **ROBERT BOSCH GMBH, Postfach 50, D-7000 Stuttgart 1 (DE)**

(72) Erfinder: **Kraus, Werner, Arnikaweg 21, D-8972 Sonthofen (DE)**
Erfinder: **Nelitz, Sigurd, Elsa-Brandtströmstrasse 10, D-8972 Sonthofen (DE)**
Erfinder: **Stoss, Alexander, Maderhalm 28, D-8975 Fischen (DE)**
Erfinder: **Tüchler, Theodor Jost, Imanuel-Kant-Strasse 21, D-7251 Hemmingen (DE)**

(54) **Kodierspeicher für Transportbehälter.**

(57) Es wird ein Kodierspeicher für Transportbehälter vorgeschlagen, welche insbesondere zum Hindurchführen durch Lösemittel-Auswaschanlagen bestimmt sind. Der Kodierspeicher hat ein napfförmiges, vorzugsweise aus Blech gezogenes Gehäuse (20), dessen Boden (22) die Mittel zum Befestigen am Transportbehälter aufweist sowie ein Drehlager (32) für das als Zeiger ausgebildete Kodierelement (34) trägt. Das Kodierelement (34) ist von Hand in verschiedene Raststellungen drehbar, welche der jeweils gespeicherten Information entsprechen und von einem neben der Transportbahn aufgestellten Lesegerät abgefragt werden können. Der Kodierspeicher besteht aus einfachen und billigen Teilen, die leicht zusammengebaut werden können. Wegen der offenen Bauweise kann in den Kodierspeicher eingedrungenes Lösemittel nach dessen Austauchen aus der Flüssigkeit leicht wieder ablaufen.

EP 0 065 302 A1

R. 8996

30.3.11981 Ki/Le

0065302

ROBERT BOSCH GMBH, 7000 STUTTGART 1

Kodierspeicher für Transportbehälter

Stand der Technik

Die Erfindung geht aus von einem Kodierspeicher nach
der Gattung des Hauptanspruchs. Bei einem bekannten
Kodierspeicher der gattungsmäßigen Art (DE-OS 30 12
358) ist das Gehäuse ein quaderförmiger Teil, in welchem
die als Bolzen ausgebildeten Kodierelemente mit geringem
Lagerspiel verschiebbar gelagert sind. Diese Kodierspeicher
haben sich in Montagesystemen mit Doppelgurtförderern
schon vielfach bewährt, wo sie an plattenförmigen Werkstückträgern befestigt sind, die auf den Fördergurten
aufliegen und darauf durch Haftreibung mitgenommen
werden. Zur Anbringung an Transportbehältern und -gestellen,
welche auch außerhalb einer fest installierten Transportbahn bewegt und gehandhabt, z.B. gestapelt werden, können
die bekannten Kodierspeicher jedoch verhältnismäßig leicht.
beschädigt werden. Außerdem weisen die bekannten Kodierspeicher
wegen ihres geschlossenen Gehäuses innere Hohlräume und Spalte
auf, sodaß auch ihre Verwendung in solchen Transportsystemen
nicht angezeigt erscheint, welche beispielsweise durch Lösemittel-
Auswaschanlagen hindurch führen. Das Lösemittel würde durch die
Lagerspalte der als Bolzen ausgebildeten Kodierelemente in die
inneren Hohlräume des Gehäuses eindringen und daraus nicht mehr zu

...

0065302

entfernen sein, wodurch die Funktionsfähigkeit der
Kodierspeicher nach längerem Betrieb beeinträchtigt
werden könnte.

Vorteile der Erfindung

Die erfindungsgemäße Anordnung mit den kennzeichnenden
Merkmalen des Hauptanspruchs hat demgegenüber den Vorteil, daß der Kodierspeicher sehr flach ausgebildet werden
kann, sodaß er beispielsweise nicht über einen oberen
Stapelrand des Transportbehälters hervorsteht und durch
diesen Rand vor Beschädigungen geschützt ist. Durch die
offene Bauweise des Gehäuses sind außerdem Hohlräume und
Spalte vermieden, aus denen das Lösemittel nicht oder
nur schwer wieder austreten kann. Der erfindungsgemäße
Kodierspeicher eignet sich daher besonders für Transportbehälter und -gestelle, welche zum Hindurchführen durch
Lösemittel-Auswaschanlagen bestimmt sind.

Durch die in den Unteransprüchen aufgeführten Maßnahmen sind
vorteilhafte Weiterbildungen der im Hauptanspruch angegebenen
Anordnung möglich.

Wenn das napfförmige Gehäuse des Kodierspeichers gemäß
Anspruch 2 eine konisch sich erweiternde Umfangswand hat,
fließt das Lösungsmittel nach dem Austauchen des Transportbehälters oder -gestells aus der Auswaschanlage aus dem Gehäuse
restlos ab.

Eine einfache und leicht zu montierende Ausführung ergibt
sich, wenn der Kodierspeicher gemäß den konstruktiven
Merkmalen der Ansprüche 3 bis 5 ausgebildet ist. Der das
Drehlager bildende Bolzen kann aber auch in das Gehäuse
hart eingelötet sein.

Die erfindungsgemäße Anordnung gestattet es auch, sowohl das Gehäuse als auch das Kodierelement aus einem
Blechmaterial zu fertigen, welches auch durch besonders
aggressive Lösemittel nicht angegriffen wird. Das Gehäuse
kann gemäß Anspruch 6 ein gezogenes Blechteil mit hochgestelltem Flanschrand sein, dessen Boden gegebenenfalls
gemäß

...

Anspruch 7 eine zentrale Prägung zur Aufnahme der Befestigungsmittel für das Drehlager hat.

Das Kodierelement kann gemäß Anspruch 8 ein abgekröpfter Blechstreifen sein, welcher einen am Boden des Gehäuses aufliegenden ersten Endabschnitt und einen in der Ebene des Gehäuserandes bzw. -flansches liegenden zweiten Endabschnitt hat. Ein derart ausgebildetes Kodierelement kann von Hand leicht erfaßt und gegenüber dem Gehäuse in die gewünschte Kodierstellung gedreht werden.

Zum erleichterten Einstellen des Kodierelementes können am Boden des Gehäuses Markierungen, z.B. Zahlen, angebracht sein, welche den Rastmitteln für die betreffenden Kodierstellungen zugeordnet sind. Zur Vervielfachung der speicherbaren Informationen können zwei oder mehr Kodierspeicher neben- bzw. untereinander auf dem Transportbehälter bzw. -gestell angebracht sein, oder in dem Gehäuse eines Kodierspeichers können zwei Kodierelemente untergebracht sein, welche unabhängig voneinander verstellbar sind.

Die Transportbehälter bzw. -gestelle können auch auf mindestens zwei Seiten mit einem oder mehreren Kodierspeichern versehen sein. Das Gehäuse des bzw. der Kodierspeicher kann ferner auch in die betreffende Behälterwand bündig eingelassen oder überhaupt in die Behälterwand integriert, z.B. eingeprägt sein.

Zeichnung

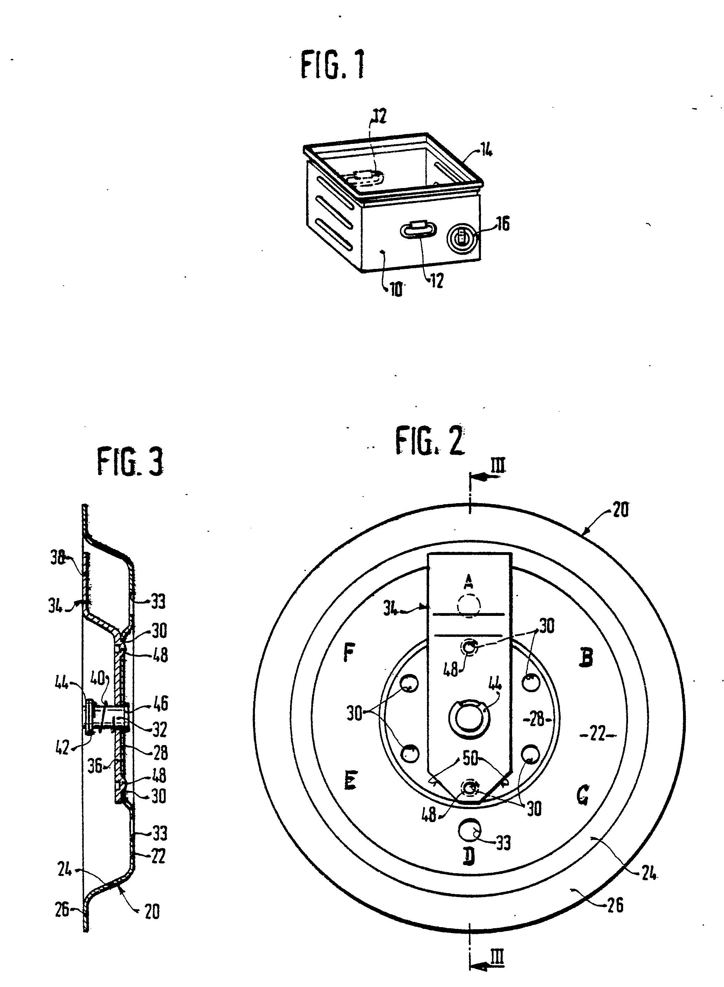

Ein Ausführungsbeispiel der Erfindung ist in der Zeichnung dargestellt und in der nachfolgenden Beschreibung näher erläutert. Es zeigen Figur 1 raumbildlich und verkleinert einen Transportbehälter mit einem Kodierspeicher nach dem Ausführungsbeispiel, Figur 2 den Kodierspeicher nach Figur 1 in Draufsicht und Figur 3 einen Schnitt nach der Linie III-III in Figur 2.

Beschreibung des Ausführungsbeispieles

Der aus geprägten Blechteilen bestehende Transportbehälter 10 hat zwei Handgriffe 12 und einen oberen Stapelrand 14, welcher um ein bestimmtes Maß über die Seitenwände hervorsteht. Unter dem Stapelrand 14 und neben dem einen Handgriff 12 ist ein Kodierspeicher 16 am Transportbehälter 10 befestigt, welchem durch die nachstehenden

...

noch näher beschriebenen Mittel eine Information über
den Transportweg des Behälters 10 eingegeben ist. 0065302

Der Kodierspeicher 16 hat ein aus Blech gezogenes
napfförmiges Gehäuse 20 (Figur 3), mit einem Boden 22,
welcher über eine sich konisch erweiternde Umfangswand 24
mit einem hochgestellten Flanschrand 26 verbunden ist.
Am Boden 22 ist ein zur Seite des Flanschrandes 26 hin
ausgeprägter Zentralbereich 28 gebildet, der mit sechs auf
einem gemeinsamen Teilkreis liegenden und über diesen
gleichmäßig verteilten Löchern 30 sowie mit einer zentralen
Bohrung versehen ist, durch die ein Lagerbolzen 32 hindurchgesteckt ist. Ferner ist der Boden 22 mit zwei sich diametral
gegenüberliegenden Bohrungen 33 versehen, durch welche die Schrauben
oder dgl. zum Befestigen des Kodierspeichers am Transportbehälter 10 hindurchtreten.

Auf den Lagerbolzen 32 ist ein Kodierelement 34 aufgesteckt, welches aus einem abgekröpften Blechstreifen gebildet ist. Das Kodierelement 34 hat einen ersten Endabschnitt 36, welcher auf dem Zentralbereich 28 des
Bodens 22 aufliegt, und einen zweiten Endabschnitt 38,
der in der Ebene des Flanschrandes 26 liegt. Der Endabschnitt 36 ist von einer Schraubenfeder 40 gegen den
Zentralbereich 28 des Bodens 22 gedrückt, die sich über
eine Scheibe 42 und einen Sprenring 44 am Lagerbolzen 32
abstützt. Dieser hat einen Kopf 46, welcher auf der äußeren
Seite des Bodens 22 vertieft aufliegt und die Stützkraft der
Schraubenfeder 40 abfängt. Der Lagerbolzen 32 ist lose
durch die Bohrung im Boden 22 hindurchgesteckt und durch
die Schraubenfeder 40 unverlierbar, jedoch lösbar, im
Gehäuse 20 gehalten.

Der Endabschnitt 36 des Kodierelements 34 hat zwei in
Bezug auf die Lagerstelle sich diametral gegenüberliegende geprägte Buckel 48, deren Abstand dem Teilkreis-
Durchmesser entspricht, auf welchem die Löcher 30 im
Boden 22 liegen. Die Buckel 48 vermögen auf diese Weise
in sechs verschiedenen Winkelstellungen des Kodierelementes 34 in die Löcher 30 einzugreifen und das
Kodierelement 34 in diesen Stellungen rastend festzuhalten. Die

...

0065302

Stellungen sind in Figur 2 mit A bis F bezeichnet. Zum Verstellen des Kodierelementes dient dessen hochgestellter Endabschnitt 38 als Handhabe. Der andere Endabschnitt 36 ist.mit abgeschrägten Flächen 50 versehen, wodurch sich die Form eines auf die entsprechende Stellungsbezeichnung weisenden Pfeile ergibt.

Zum Speichern der gewünschten Information wird das Kodierelement 34 von Hand in die gewünschte Stellung gebracht, in der es durch die Schraubenfeder 40 schüttelsicher festgehalten wird. An einer bestimmten Stelle des Transportweges, z.B. kurz hinter einer Lösemittel-Auswaschanlage, läuft der Transportbehälter 10 an einem in Höhe des Kodierspeichers 16, 34 angeordneten Lesegerätes vorbei, welches die durch die Stellung des Kodierelementes 34 gegenüber dem Gehäuse 20 gegebene Information abfragt und daraus ein den Verlauf des nachfolgenden Transportweges bestimmendes Signal ableitet. Durch den konischen Verlauf der Umfangswand 24 des Gehäuses 20 kann im Falle des Transportes durch eine Lösemittel-Auswaschanlage oder dgl. das Lösemittel restlos aus dem Gehäuse ablaufen. Der zwischen dem Lagerbolzen 32 und dem Kodierelement 34 gebildete Lagerspalt ist so kurz und kann außerdem so groß bemessen werden, daß in diesen Spalt eindringendes Lösemittel sich ebenfalls wieder vollständig entfernen kann, sodaß die Funktionsfähigkeit des Kodierspeichers über praktisch unbegrenzte Zeit hinweg erhalten bleibt.

R. 0996

Ki/Le 30.3.1981

0065302

ROBERT BOSCH GMBH, 7000 STUTTGART 1


Ansprüche


1. Kodierspeicher für Transportbehälter, insbesondere
für durch Lösemittel-Auswaschanlagen hindurchführbare Kisten, Gestelle und dgl., mit einem am Transportbehälter bzw. -gestell befestigbaren Gehäuse, in welchem
ein metallisches Kodierelement von Hand einstellbar gelagert ist, dessen der gespeicherten Information entsprechende Stellung gegenüber dem Gehäuse von einem
neben der Transportbahn angeordneten Lesegerät berührungsfrei abgefragt werden kann, dadurch gekennzeichnet, daß das
Gehäuse (20) die Form eines Napfes hat, dessen Boden (22)
mit Mitteln (33) zum Befestigen am Transportbehälter (10)
bzw. -gestell, einem Drehlager (32) für das als Zeiger
ausgebildete Kodierelement (34) und mit Rastmitteln (30)
versehen ist, welche das Kodierelement (34) in der von
Hand eingestellten, der gewünschten Information entsprechenden
Drehlage gegenüber dem Gehäuse (20) schüttelsicher festhalten.


. . .

0065302

2. Kodierspeicher nach Anspruch 1, dadurch gekennzeichnet, daß das Gehäuse (20) eine konisch sich
erweiternde Umfangswand (24) hat.

3. Kodierspeicher nach Anspruch 1 oder 2, dadurch
gekennzeichnet, daß das Drehlager für das Kodierelement (34) ein Bolzen (32) ist, auf welchen das
Kodierelement (34) und eine Schraubenfeder (40)
aufgesteckt sind, welche sich an einem Bund (44, 42)
des Bolzens (32) abstützt und das Kodierelement (34)
gegen den mit den Rastmitteln (30) versehenen Boden (22)
des Gehäuses drückt.

4. Kodierspeicher nach Anspruch 3, dadurch gekennzeichnet, daß der Bolzen (32) lose durch den Boden
(22) des Gehäuse (20) hindurchgesteckt ist und einen
an der Außenwand des Bodens (22) anliegenden Kopf (46)
hat, welcher durch die Schraubenfeder (40) gegen den
Boden (22) gedrückt ist.

5. Kodierspeicher nach einem der vorhergehenden Ansprüche,
dadurch gekennzeichnet, daß die Rastmittel durch Löcher
(30) in dem einen Teil (Gehäuse 20 oder Kodierelement 34)
und durch in die Löcher (30) einrastbare Vorsprünge (48)
am anderen Teil (34 bzw. 20) gebildet sind.

6. Kodierspeicher nach einem der vorhergehenden Ansprüche,
dadurch gekennzeichnet, daß das Gehäuse (20) ein gezogenes Blechteil mit hochgestelltem Flanschrand (26) ist.

...

0065302

7. Kodierspeicher nach Anspruch 6, dadurch gekennzeichnet, daß der Boden (22) des Gehäuse (20) einen zur Seite des Flanschrandes (26) hin ausgeprägten Zentralbereich (28) hat, der die Rastmittel (30) und das Drehlager (32) für das Kodierelement (34) aufweist bzw. trägt.

8. Kodierspeicher nach einem der vorhergehenden Ansprüche, dadurch gekennzeichnet, daß das Kodierelement ein abgekröpftes Blechteil (34) ist, welches einen am Boden (22 bzw. 28) des Gehäuse (20) aufliegenden Endabschnitt (36) und einen in der Ebene des Gehäuserandes liegenden Endabschnitt (38) hat.

9. Kodierspeicher nach einem der vorhergehenden Ansprüche, dadurch gekennzeichnet, daß im Gehäuse mindestens zwei als Zeiger ausgebildete Kodierelemente unabhängig voneinander drehbar gelagert sind.

## FIG. 1

## FIG. 3

## FIG. 2

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 180 996 (DE GOOD) *Insgesamt* | 1,5,9 | B 65 G 47/48 G 06 K 19/04 B 23 Q 41/02 |
| | --- | | |
| A | DE-A-2 233 964 (GEBHARDT) | 1 | |
| | --- | | |
| A | DE-A-2 211 260 (GEBHARDT) | 1 | |
| | --- | | |
| A | DE-A-2 030 587 (W.STOHRER MASCHINENFABRIK) *Figuren 1-3; Seiten 1-4* | 1 | |
| | ----- | | |

**RECHERCHIERTE SACHGEBIETE (Int. Cl. ³)**

B 07 C 3/00
B 07 C 3/08
B 07 C 5/34
B 23 Q 41/02
B 65 G 47/48
B 65 G 47/49
B 65 G 51/42
B 65 G 51/44
G 06 K 7/10
G 06 K 19/04

Der vorliegende Recherchenbericht wurde für alle Patentansprüche erstellt.

| Recherchenort | Abschlußdatum der Recherche | Prüfer |
|---|---|---|
| DEN HAAG | 18-08-1982 | PESCHEL W. |